Europäisches Patentamt

European Patent Office

Office européen des brevets

(19)

(11) **EP 0 842 899 B1**

(12) **EUROPEAN PATENT SPECIFICATION**

(45) Date of publication and mention
of the grant of the patent:
**17.01.2001 Bulletin 2001/03**

(51) Int Cl.[7]: **C01F 17/00**

(21) Application number: **97119887.4**

(22) Date of filing: **13.11.1997**

(54) **Method for the preparation of fine globular particles of yttrium oxide**

Verfahren zur Herstellung von feinen kugelförmigen Yttriumoxidteilchen

Procédé de production des particules fines et globulaires d'oxide d'yttrium

(84) Designated Contracting States:
**DE FR GB**

(30) Priority: **13.11.1996 JP 30164696**

(43) Date of publication of application:
**20.05.1998 Bulletin 1998/21**

(73) Proprietor: **Shin-Etsu Chemical Co., Ltd.**
**Chiyoda-ku Tokyo 100 (JP)**

(72) Inventors:
• **Wataya, Kazuhiro c/o Shin-Etsu Chem.Co.,Ltd.**
**Takefu-shi, Fukui-ken (JP)**
• **Sakai, Shigeru c/o Shin-Etsu Chem.Co.,Ltd.**
**Takefu-shi, Fukui-ken (JP)**

(74) Representative: **Riebling, Peter, Dr.-Ing.**
**Patentanwalt**
**Postfach 31 60**
**88113 Lindau (DE)**

(56) References cited:
**WO-A-88/03910**

• **CHEMICAL ABSTRACTS, vol. 108, no. 20, 16 May 1988 Columbus, Ohio, US; abstract no. 170160, VERLINDEN, M. C.: "Preparation of monodispersed yttrium hydroxycarbonate spheres by homogeneous precipitation" XP002056464 & REPORT (1987), IS-T-1234;ORDER NO. DE87013071, 62 PP. AVAIL.: NTIS FROM: ENERGY RES. ABSTR. 1987, 12(20), ABSTR. NO. 41360, 1987,**
• **AIKEN B ET AL: "PREPARATION AND PROPERTIES OF MONODISPERSED COLLOIDAL PARTICLES OF LANTHANIDE COMPOUNDS: III, YTTRIUM(III) AND MIXED YTTRIUM(III)/CERIUM (III) SYSTEMS" JOURNAL OF THE AMERICAN CERAMIC SOCIETY, vol. 71, no. 10, 1 October 1988, pages 845-853, XP000081165**
• **DATABASE WPI Section Ch, Week 9130 Derwent Publications Ltd., London, GB; Class E33, AN 91-219185 XP002056465 & JP 03 141 115 A (CICHIBU CEMENT KK) , 17 June 1991**

**Description**

BACKGROUND OF THE INVENTION

The present invention relates to a method for the preparation of a powder of yttrium oxide or, more particularly, to a method for the preparation of fine particles of yttrium oxide having an outstandingly globular particle configuration.

As is well known, powders of yttrium oxide are useful in various modern technological fields, for example, as a base material of a sintered body of yttrium oxide, sintering aid of various kinds of ceramic materials, base material of luminescent phosphors, coating agent on the particles of a luminescent phosphor and so on. It is desirous in these applications that the particles of yttrium oxide are as fine as possible having a particle diameter in the so-called submicron range and have a globular particle configuration in order to ensure good dispersibility.

In the prior art, submicron-range fine particles of yttrium oxide particles are obtained either by a mechanical means of pulverization of coarser particles by using a suitable pulverizing machine such as beads mills or by the so-called urea method in which an aqueous solution containing a water-soluble inorganic salt of yttrium, e.g., yttrium nitrate, and urea is heated at an elevated temperature so that the urea is hydrolyzed to produce hydroxyl ions and carbonate ions which react with the yttrium ions to form precipitates of yttrium carbonate hydroxide followed by calcination of the precipitates of yttrium carbonate hydroxide in air to convert the same into yttrium oxide particles.

The former method of mechanical pulverization has several problems. Namely, conventional pulverizing machines are generally not so efficient for obtaining extremely fine particles of a semimicron order diameter with consequently low productivity and it is almost always unavoidable that the powder obtained by mechanical pulverization is contaminated by the materials of the machine *per se* and the dispersing aid optionally added to the powder under pulverization. Moreover, it is a natural consequence of any mechanical means for particle size reduction that the particles as pulverized have an irregular particle configuration with rugged surfaces along with occurrence of cracks, fissures and pores within the particles. This fact is evidenced by the large discrepancy between the specific surface area of the particles obtained by the so-called BET method and the value of specific surface area estimated for imaginary particles having a perfectly spherical particle configuration with a uniform particle diameter equal to the average particle diameter $D_{50}$ of the actual particles because the surface area measured by the BET method includes the internal surfaces of the cracks, fissures and pores.

The urea method is also not free from problems because, although the method is successful in obtaining particles of yttrium carbonate hydroxide having a uniform particle size without agglomeration when preparation is undertaken in a very small laboratory scale, the particles of yttrium carbonate hydroxide have a diversified particle size distribution with many agglomerates when the method is undertaken in a large scale.

SUMMARY OF THE INVENTION

The present invention accordingly has an object to provide a novel and efficient method, which is an improvement of the conventional urea method for the preparation of a powder of yttrium oxide, for the preparation of fine yttrium oxide particles having a uniform globular particle configuration with a relatively smooth surfaces free from defects such as cracks even in a large scale preparation.

Thus, the method of the present invention for the preparation of fine particles of yttrium oxide by the urea method comprises the steps of:

(a) heating and keeping an aqueous solution of a water-soluble inorganic salt of yttrium in a concentration in the range from 0.01 to 0.1 mole/liter calculated for the yttrium element at a temperature of 80 °C or higher or, preferably, 90 °C or higher;

(b) adding urea in an amount in the range from 3 to 100 moles per mole of yttrium in the aqueous solution prepared in step (a) either in the form of solid or in the form of an aqueous solution to the aqueous solution of a water-soluble inorganic salt of yttrium to form a reaction mixture while the reaction mixture is kept at a temperature of 80 °C or higher or, preferably, 90 °C or higher to effect precipitation of yttrium carbonate hydroxide, the reaction mixture being kept at a temperature of 80 °C or higher or, preferably, 90 °C or higher until completion of precipitation of yttrium carbonate hydroxide;

(c) collecting the precipitates of yttrium carbonate hydroxide by separation from the reaction mixture; and

(d) calcining the precipitates of yttrium carbonate hydroxide in an oxidizing atmosphere at a temperature in the range from 700 to 1300 °C.

The particles of yttrium oxide obtained by the above described method have a globular particle configuration with an average particle diameter usually in the range from 0.2 to 1.0 μm and have a specific surface area W determined by the BET method which is not larger than 2.5 times of the specific surface area S of perfectly spherical imaginary yttrium oxide particles calculated with an assumption that the particle diameter distribution is monodispersed and the particle diameter is equal to the average particle diameter $D_{50}$ of the actual yttrium oxide particles.

DETAILED DESCRIPTION OF THE PREFERRED EMBODIMENTS

In the following, the above defined method of the invention is described in more detail for various particular conditions of the process.

The water-soluble inorganic salt of yttrium used in step (a) of the inventive method can be selected, though not particularly limitative, from chloride, sulfate and nitrate of yttrium of which yttrium nitrate is preferred because nitrate radicals adsorbed on the precipitates of yttrium carbonate hydroxide can be almost completely decomposed in the calcination treatment of the precipitates leaving no contaminants of the yttrium oxide powder originating from the nitrate radicals.

The concentration of the water-soluble yttrium salt in the aqueous solution is in the range from 0.01 to 0.1 mole/liter calculated for the yttrium element. When the concentration is too low, a disadvantage of decreased productivity is caused due to the unduly large volume of the aqueous solution to be processed for an amount of the yttrium oxide product while, when the concentration is too high, the primarily precipitated particles of yttrium carbonate hydroxide may cause agglomeration so that discretely dispersed globular particles of yttrium oxide can hardly be obtained.

In step (a) of the inventive method, the aqueous solution of a water-soluble inorganic salt of yttrium is heated and kept at a temperature not lower than 80 °C or, preferably, not lower than 90 °C and, in step (b), urea is added to the solution to form an aqueous reaction mixture, in which the precipitation reaction of yttrium carbonate hydroxide proceeds, while the reaction mixture is kept at the above mentioned elevated temperature.

The urea introduced into the aqueous solution of the yttrium salt can be either in the form of solid or in the form of an aqueous solution prepared beforehand. The amount of urea added to the aqueous solution in step (b) is in the range from 3 moles to 100 moles per mole of yttrium in the solution. When the amount of urea is too small even if in excess of the stoichiometric amount, the velocity of the precipitation reaction of yttrium carbonate hydroxide is so low as to cause an economical disadvantage while no particular additional advantages can be obtained by increasing the amount of urea to exceed the above mentioned upper limit rather with an economical disadvantage due to the increased cost for urea.

The amount of urea added to the aqueous solution and the reaction temperature are the factors which influence the particle size of the precipitated particles of yttrium carbonate hydroxide and hence the particle size of the yttrium oxide particles obtained therefrom. As a general trend, the particle size of yttrium carbonate hydroxide is increased by decreasing the amount of urea or by decreasing the reaction temperature. It is not always necessary that the reaction mixture under proceeding of the precipitation reaction is agitated provided that uniformity of the temperature can be ensured throughout the volume of the reaction mixture at the above mentioned temperature until completion of the precipitation reaction.

The precipitates of yttrium carbonate hydroxide formed in the reaction mixture are, in step (c), separated and collected from the reaction mixture by a suitable solid-liquid separation means such as filtration followed by, if necessary, washing with deionized water and drying. The dried powder of yttrium carbonate hydroxide is then subjected to a calcination treatment in an oxidizing atmosphere such as air at a temperature in the range from 700 to 1300 °C or, preferably, from 800 to 1000 °C. When the temperature of calcination is too low, the thermal decomposition of yttrium carbonate hydroxide is so slow or incomplete sometimes to leave a trace amount of a carbonaceous material as a contaminant of the yttrium oxide powder while, when the calcination temperature is too high, the phenomenon of sintering may take place between the yttrium oxide particles so that discretely dispersed globular yttrium oxide particles can hardly be obtained.

In the following, the method of the present invention is described in more detail by way of examples and comparative examples, in which the yttrium oxide powders were subjected to evaluation for the following three items (1) to (3) by the respective testing procedures described there.

(1) Average particle diameter $D_{50}$ (µm)

Measurement was made by using an instrument for the determina-tion of particle size distribution utilizing the shift in the wavelength of a laser beam scattered at the particles by means of the Doppler effect.

(2) Specific surface area W ($m^2$/g)

Measurement was made by a simplified BET method in which the sample powder was chilled at the temperature of liquid nitrogen under an atmosphere of nitrogen gas to have the nitrogen adsorbed on the surface of the particles followed by warming of the sample to room temperature to measure the volume of the desorbed nitrogen gas. The specific surface area in $m^2$/g could be calculated from this volume of desorbed nitrogen gas assuming the cross sectional area of the nitrogen molecules.

(3) Imaginary surface area S ($m^2$/g)

Calculation was made from an equation

$$S = 6/(\rho \times D_{50}),$$

in which $D_{50}$ is the average particle diameter and $\rho$ is

the true density of yttrium oxide in $g/cm^3$.

Example 1.

An aqueous solution was prepared by dissolving yttrium nitrate in deionized water in a concentration of 0.04 mole/liter and 6 liters of the solution were heated and kept at 97 °C. The aqueous solution was admixed with 230.6 g of urea under agitation to be rapidly dissolved therein. While, as the urea was dissolved in the aqueous solution, the temperature of the solution was dropped to 90 °C, the solution regained the initial temperature of 97 °C within about 3 minutes by heating from outside and the solution was kept at this temperature for further 60 minutes to cause precipitation of yttrium carbonate hydroxide. The precipitates were collected by filtering the reaction mixture through filter paper on a Buchner funnel. The wet cake was transferred into a sagger of fused silica glass and dried and calcined therein under an atmosphere of sir at 800 °C for 2 hours followed by spontaneous cooling to obtain 26.5 g of a white powder as the product which could be identified by analysis to be yttrium oxide.

The electron microscopic examination of this powder indicated that the particles had a globular particle configuration with a relatively uniform diameter of about 0.3 μm. The average particle diameter $D_{50}$ as determined by the laser beam method was about 0.35 μm with a narrow distribution of the particle diameters. The specific surface area W of the powder determined by the BET method was 6.2 $m^2/g$ while the specific surface area S calculated for perfectly spherical imaginary yttrium oxide particles of 0.35 μm diameter was about 3.4 $m^2/g$ so that the ratio of W/S was 1.82.

Example 2.

An aqueous solution was prepared by dissolving yttrium nitrate in deionized water in a concentration of 0.04 mole/liter and 1000 liters of the solution were heated and kept at 97 °C. The aqueous solution was admixed with 24.0 kg of urea under agitation to be rapidly dissolved therein. While, as the urea was dissolved in the aqueous solution, the temperature of the solution was dropped to 90 °C, the solution regained the initial temperature of 97 °C within about 5 minutes by heating from outside and the solution was kept at this temperature for further 60 minutes to cause precipitation of yttrium carbonate hydroxide. The precipitates were collected by centrifugal separation. The wet cake was transferred into a sagger of fused silica glass and calcined therein under an atmosphere of air at 800 °C for 2 hours followed by spontaneous cooling to obtain 4.5 kg of a white powder as the product which could be identified by analysis to be yttrium oxide.

The electron microscopic examination of this powder indicated that the particles had a globular particle configuration with a relatively uniform diameter of about 0.3 μm. The average particle diameter $D_{50}$ as determined by the laser beam method was about 0.35 μm with a narrow distribution of the particle diameters. The specific surface area W of the powder determined by the BET method was 6.4 $m^2/g$ while the specific surface area S calculated for perfectly spherical imaginary yttrium oxide particles of 0.35 μm diameter was about 3.4 $m^2/g$ so that the ratio of W/S was 1.88.

Comparative Example 1.

A 100 g portion of a powder of yttrium oxide, of which the particles had an average particle diameter $D_{50}$ of about 5.5 μm, was subjected to mechanical pulverization in a beads mill to give 98.5 g of size-reduced fine particles which had an irregular particle configuration with an approximate size of about 0.4 μm as examined with an electron microscope. Measurement of the particle size distribution by the laser beam method indicated that the average particle diameter $D_{50}$ was 0.35 μm with a broad distribution. The specific surface area W of the powder as determined by the BET method was about 23 $m^2/g$ while the imaginary specific surface area S calculated from the $D_{50}$ value was about 3.4 $m^2/g$ so that the ratio of W/S was as large as 6.8.

Comparative Example 2.

An aqueous solution was prepared by dissolving yttrium nitrate and urea in deionized water in a concentration of 0.04 mole/liter and 0.4 mole/liter, respectively, and 1000 liters of the solution at 40 °C were heated up to 97 °C taking about 20 minutes and kept at this temperature for 60 minutes to cause precipitation of yttrium carbonate hydroxide. The precipitates were collected by centrifugal separation. The wet cake was transferred into a sagger of fused silica glass and calcined therein under an atmosphere of air at 800 °C for 2 hours followed by spontaneous cooling to obtain 4.5 kg of a white powder as the product which could be identified by analysis to be yttrium oxide.

The electron microscopic examination of this powder indicated that the particle configuration of the particles was irregular having a diversified distribution of the particle size with agglomeration. Measurement of the average particle diameter $D_{50}$ by the laser beam method gave a result that the particle diameter distribution was broad within a range of several μm not to give a discretely dispersed globular particles of yttrium oxide.

**Claims**

1.    A method for the preparation of fine particles of yttrium oxide by the urea method which comprises the steps of:

    (a) heating and keeping an aqueous solution of a water-soluble inorganic salt of yttrium in a concentration in the range from 0.01 to 0.1 mole/liter calculated for the yttrium element at a temperature of 80 °C or higher;
(b) adding urea in an amount in the range from 3 to 100 moles per mole of yttrium in the aqueous solution prepared in step (a) either in the form of solid or in the form of an aqueous solution to the aqueous solution of the water-soluble inorganic salt of yttrium to form a reaction mixture while the reaction mixture is kept at a temperature of 80 °C or higher to effect precipitation of yttrium carbonate hydroxide, the reaction mixture being kept at the temperature of 80 °C or higher until completion of precipitation of yttrium carbonate hydroxide;
(c) collecting the precipitates of yttrium carbonate hydroxide by separation from the reaction mixture; and
(d) calcining the precipitates of yttrium carbonate hydroxide in an oxidizing atmosphere at a temperature in the range from 700 to 1300 °C.

2. The method for the preparation of fine particles of yttrium oxide as claimed in claim 1 in which the water-soluble inorganic salt of yttrium is yttrium nitrate.

3. The method for the preparation of fine particles of yttrium oxide as claimed in claim 1 in which the temperature of the reaction mixture in steps (a) and (b) is 90 °C or higher.

**Patentansprüche**

1. Ein Verfahren zur Herstellung von feinen kugelförmigen Yttrium-Oxid-Teilchen durch eine Harnstoffmethode, welche die folgenden Schritte beinhaltet:

a) Erhitzen einer wäßrigen Lösung eines wasserlöslichen anorganischen Salzes von Yttrium in einer Konzentration im Bereich von 0,01 bis 0,1 Mol/Liter, berechnet für das Yttrium-Element, auf eine Temperatur von 80° C oder höher und Halten auf dieser Temperatur;

b) Zugeben einer Menge von Harnstoff im Bereich von 3 bis 100 Mol pro Mol Yttrium in die wäßrige Lösung, welche nach Verfahrensschritt a) hergestellt wurde, entweder in fester Form oder in der Form einer wäßrigen Lösung, zur wäßrigen Lösung des wasserlöslichen anorganischen Salzes von Yttrium in Form einer Reaktionsmischung, während die Reaktionsmischung auf einer Temperatur von 80° C oder höher gehalten wird, um die Fällung von Yttrium-Carbonat-Hydroxid hervorzurufen, wobei die Reaktionsmischung bei einer Temperatur von 80° C oder höher bis zur Beendigung der Fällung von Yttrium-Carbonat-Hydroxid gehalten wird;

c) Sammeln der Fällprodukte von Yttrium-Carbonat-Hydroxid durch Abtrennen von der Reaktionsmischung; und

d) Kalzinieren der Fällungsprodukte von Yttrium-Carbonat-Hydroxid in einer oxidierenden Atmosphäre bei einer Temperatur im Bereich von 700 bis 1300° C.

2. Das Verfahren zur Herstellung von feinen kugelförmigen Yttrium-Oxid-Teilchen gemäss Anspruch 1, in welchem das wasserlösliche anorganische Salz von Yttrium ein Yttrium-Nitrat ist.

3. Das Verfahren zur Herstellung von feinen kugelförmigen Yttrium-Oxid-Teilchen gemäss Anspruch 1, in welchem die Temperatur des Reaktionsgemisches in den Verfahrensschritten a) und b) 90° C oder höher beträgt.

**Revendications**

1. Procédé de préparation de fines particules d'oxyde d'yttrium par la méthode à l'urée qui comprend les étapes consistant à :

(a) chauffer et maintenir une solution aqueuse d'un sel inorganique d'yttrium soluble dans l'eau à une concentration de 0,01 à 0,1 mole/litre calculée sur la base de l'élément d'yttrium, à une température d'au moins 80°C ;
(b) ajouter de l'urée en une quantité de 3 à 100 moles par mole d'yttrium dans la solution aqueuse préparée à l'étape (a), soit sous la forme solide, soit sous la forme d'une solution aqueuse, à la solution aqueuse du sel inorganique d'yttrium soluble dans l'eau pour former un mélange réactionnel tout en maintenant ce dernier à une température d'au moins 80°C, pour effectuer la précipitation d'hydroxyde carbonate d'yttrium, le mélange réactionnel étant maintenu à une température d'au moins 80°C jusqu'à précipitation complète de l'hydroxyde carbonate d'yttrium ;
(c) collecter les précipités d'hydroxyde carbonate d'yttrium par séparation à partir du mélange réactionnel ; et
(d) calciner les précipités d'hydroxyde carbonate d'yttrium dans une atmosphère oxydante à une température située dans la plage de 700 à 1 300°C.

2. Procédé pour la préparation de fines particules d'oxyde d'yttrium selon la revendication 1, dans lequel le sel inorganique d'yttrium soluble dans l'eau est le nitrate d'yttrium.

3. Procédé de préparation de fines particules d'oxyde d'yttrium selon la revendication 1, dans lequel la température du mélange réactionnel dans les étapes (a) et (b) est d'au moins 90°C.